# EUROPEAN PATENT APPLICATION

(11) **EP 0 835 995 A2**
(43) Date of publication of application: **15.04.1998**
(21) Application number: 97117412.3
(22) Date of filing: 08.10.1997
(51) Int. Cl.: F02B 27/02

(54) **Internal combustion engine with an intake passage of variable volume**

(30) Priority: 08.10.1996 JP 267086/96
(71) Applicant: YAMAHA HATSUDOKI KABUSHIKI KAISHA, Iwata-shi Shizuoka-ken, 438 (JP)
(72) Inventor: Ito, Takeshi, Iwata, Shizuoka 438 (JP); Hanajima, Tosiharu, Iwata, Shizuoka 438 (JP)
(74) Representative: Grünecker, Kinkeldey, Stockmair & Schwanhäusser Anwaltssozietät

(57) **Abstract**

An internal combustion engine comprises an intake system and an exhaust system. Said systems are controllable such that during operation of said engine valve overlapping is establishable. Further, a volume changing means is provided for variably changing the volume of an intake passage in dependence of engine operating conditions.

## Description

This invention relates to an internal combustion engine comprising an intake system and an exhaust system, said systems are controllable such that during operation of said engine valve overlapping is establishable.

External EGR units have often been employed to reduce NOx emissions in the exhaust gas discharged from the exhaust pipe. The external EGR unit is composed of an EGR exhaust gas passage connecting the exhaust passage and the intake passage externally of the engine, and an EGR control valve disposed in said exhaust gas passage.

In this external EGR unit, the burnt gas held In the exhaust pipe can be returned as a recirculating exhaust gas to the intake passage through negative pressure produced in the intake system during the intake stroke of the engine, to be supplied again to the combustion chamber. The above-described recirculating exhaust gas supplied by the external EGR unit is hereinafter referred to simply as an external EGR gas.
The burnt gas is returned to the intake passage in this way, so that the combustion temperature is lowered, effecting decreased NOx emissions.

However, since the atmospheric air flowing back from the downstream end of the exhaust pipe as well as the exhaust gas is mixed in the exhaust pipe during the intake stroke of the engine, the external EGR gas supplied through the external EGR unit to the intake system will contain the atmospheric air. Therefore, the ratio of the burnt gas in the external EGR gas cannot be increased In the external EGR unit.

Some conventional engines are arranged such that the period of valve overlapping is lengthened and intake efficiency is enhanced by making use of the inertia of the intake air during high speed operation of the engine, thereby effecting improved performance. In such a type of high output engine, owing to the long valve overlapping period, the burnt gas discharged to the exhaust pipe during engine operation from an idling state through a low load and speed range to an intermediate load and speed range, might be forced to flow back into the combustion chamber and further to the intake passage by the negative pressure in the intake passage on the upstream side from the intake valve when the intake valve is opened. The back flowing burnt gas will enter into the combustion chamber during the intake stroke and act as a recirculating exhaust gas. That is, the recirculating exhaust gas decreases the combustion temperature, effecting reduced NOx emissions. The burnt gas flowing back from the downstream side of the exhaust valve during valve overlapping is herein referred to a self EGR gas.

The self EGR gas, which is a burnt gas flowing back from the downstream side of the exhaust valve during valve overlapping, does not contain the atmospheric air, and the ratio of the burnt gas components is larger than that in said external EGR gas. Therefore, in such a type of high output engine, the burnt gas sufficient enough to contribute to the reduction of NOx emissions can be recirculated for the next combustion cycle even in a short period of time of valve overlapping.

However, since the pressure (negative pressure in the intake pipe) in the intake passage between the Intake valve and the throttle valve comes closer to the atmospheric pressure for a larger throttle opening, the energy required for the back flow of the burnt gas during valve overlapping decreases gradually with increasing throttle opening. Therefore, as the throttle opening increases, the ratio of the self EGR gas to the volume of the total space of the combustion chamber and the intake passage between the intake valve and the throttle valve decreases, lowering the absolute volume of the self EGR gas. Further, the volumetric efficiency of the fresh air increases with increasing throttle opening, so that the ratio of the self EGR gas in the increasing fresh air decreases drastically with increasing throttle valve opening. This poses a problem that the reduction of NOx emissions, if possible during idling, is prevented as the throttle opening increases.

Accordingly, it is an objective of the present invention to provide an improved internal combustion engine as indicated above which with simple technical means ensures a reliable reduction of NOx emissions in dependence of the engine load.

According to the present invention, this objective is solved for an internal combustion engine as indicated above by a volume changing means for variably changing the volume of an intake passage in dependence of engine operating conditions.

A relatively larger volume of the intake passage results in an increased volume of the fresh air in the intake passage, so that the same output can be obtained for a smaller throttle opening. Thus, when the volume of the intake passage is increased by the volume changing means during engine operation at intermediate load and speed, or at least at low load and speed, the engine can be operated with a relatively small throttle opening and at a larger negative pressure. Therefore, In this operating range, a larger amount of self EGR gas is supplied to the intake port during valve overlapping.
[0011]
It has been found that among the burnt gases discharged from the combustion chamber, the ones discharged at earlier and final stages of the exhaust stroke have relatively high ratios of HC components. The self EGR gas flowing back from the exhaust pipe during valve overlapping, which is a burnt gas discharged from the combustion chamber at the final stage of the exhaust stroke, contains relatively high ratio of HC components, but these HC components can be burned in the next combustion cycle.

According to an advantageous embodiment of the present invention, said volume changing means being provided between a throttle valve and at least one intake valve.

According to another preferred embodiment of the present invention, said volume changing means being adapted to control said volume such that said volume being minimizable during an idle state.

In order to further minimize NOx emissions, it is advantageous when said volume changing means being adapted such that said volume being increasable with the engine load, when said engine being operated in an intermediate load and speed range, or at least in a low load and speed range.

According to further preferred embodiments of the present invention, said volume changing means may comprise an air chamber communicating with said intake passage and a piston for slidably varying the air chamber volume, or a chamber communicating with said intake passage via a communication passage, and an opening/closing valve provided within said communication passage, or a volume changing member made of a rod having a cut-out, said volume changing member being provided in an upper wall of said intake passage, or a throttle body having a throttle valve, said throttle body being adapted to freely move along the axis of said intake passage.

In order to further reduce NOx emissions, it is advantageous when an external EGR unit being provided comprising an EGR exhaust gas passage connecting an exhaust passage with said intake passage.

According to this invention, the flow rate of the external EGR gas is increased as engine load increases.

Other preferred embodiments of the present invention are laid down in further dependent claims.

In the following, the present invention is explained in greater detail with respect to several embodiments thereof in conjunction with the accompanying drawings, wherein:
Fig. 1 is a structural illustration showing an engine intake system according to this invention;
Fig. 2 is a diagram acting as a map for use in controlling the volume changing means;
Fig. 3 is a structural illustration showing another embodiment of the volume changing means;
Fig. 4 is a diagram acting as a map for use in controlling the volume changing means;
Fig. 5 is a structural illustration of a multi-cylinder engine embodying this invention;
Figs. 6 are structural illustrations showing other embodiments of the volume changing means; and
Fig. 7 is a structural illustration showing another embodiment incorporating an external EGR unit.

### A first embodiment:

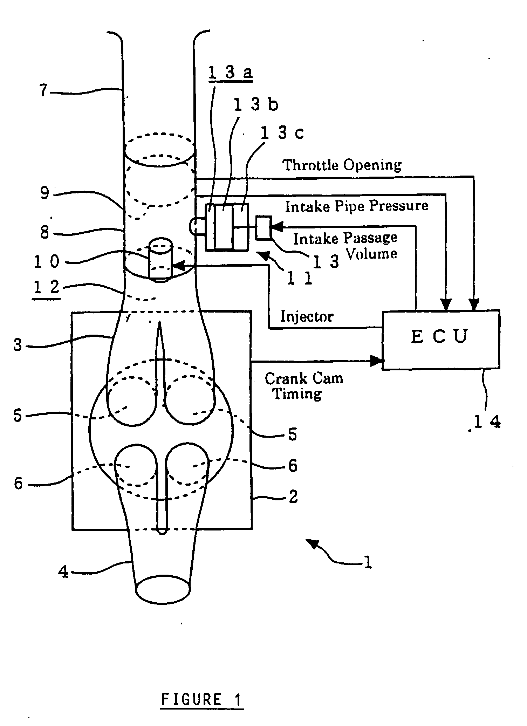

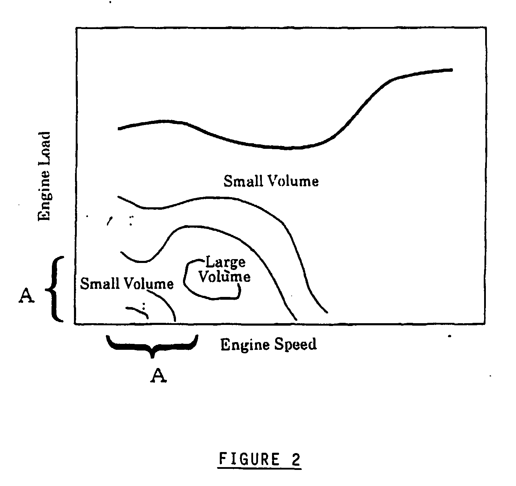

Now, an embodiment of an engine intake system according to this invention will be described below in detail with reference to Fig. 1 and Fig. 2.
Fig. 1 is a structural illustration showing an engine intake system according to this invention, and Fig. 2 is a diagram acting as a map for use in controlling the volume changing means.

In these figures, numeral 1 represents a four-stroke single cylinder engine of this embodiment, numeral 2 a cylinder of this engine 1, numeral 3 an intake port, and numeral 4 an exhaust port. The engine 1 is of a high output type, in which the valve overlapping period is set relatively long. The intake and exhaust ports 3, 4 are each formed into a forked shape, and opened and closed by two intake and two exhaust valves 5, 6, respectively. To the upstream end of the intake port 3 are connected an intake duct 7 open to the atmosphere, and a throttle body 8.

The throttle body 8 is provided, in the upstream portion, with a throttle valve 9, and in the downstream portion, with an injector 10 for injecting fuel into the intake passage. In addition, the throttle body 8 is provided with volume changing means 11 between the throttle valve 9 and the injector 10.

Thee volume changing means 11 is used for changing the volume of the intake passage 12 between the throttle valve 9 and the intake valve 5, and composed of a motor-driven cylinder 13 connected to the throttle body 8, and an ECU 14 for controlling the cylinder 13. The motor-driven cylinder 13 is arranged such that the volume of an air chamber 13a in communication with the intake passage 12 is changed through a piston 13b. The piston 13b is driven by an actuator 13c such as a step motor. That is, the volume of the intake passage 12 is increased when the piston 13b moves rightward in the figure, and decreased when it moves leftward in the figure.

The ECU 14 is arranged such that it controls the motor-driven cylinder 13 in response to engine speed and engine load. Engine speed is detected from a crankshaft (not shown) or an intake camshaft (not shown) of the engine 1. Engine load is determined from the opening of the throttle valve 9 and the pressure in the intake passage 12. Further, The ECU 14 is arranged such that the volume of the air chamber 13a of the cylinder 13 is changed according to the map shown in Fig. 2. The ECU 14 also controls the injector 10.

The map shown in Fig. 2 is arranged such that the volume of the air chamber 13a is minimized when the engine 1 is operated in an idling state, and increased with an increase both in engine speed and load when the engine is operated in a range from low load and speed to intermediate load and speed shown by symbol A in Fig. 2. In a higher load and speed operating range than the preceding one, the map is arranged such that the volume of the air chamber 13a is decreased with an increase both in engine speed and load. For the high load and speed engine operation, the volume of the air chamber 13a is set so as to be larger than during idling even when the volume is minimized.

Experiments by the inventor and others showed that the pressure in the intake passage 12 will be changed by changing the volume of the air chamber 13a and varying the volume of the intake passage 12. A relatively larger volume of the intake passage 12 results in an increased amount of fresh air in the intake passage 12, so that the same output can be obtained for a smaller throttle opening. The smaller throttle opening results in an increased negative pressure in the intake passage 12, and the amount of burnt gas (self EGR gas) flowing back to the intake port 3 is increased during valve overlapping.

That is, according to the intake system of this invention, when the volume of the intake passage 12 is set small so that the engine 1 can maintain idling operation even for a relatively large throttle opening, the negative pressure in the intake passage 12 can be kept relatively low during idling, decreasing the self EGR gas flowing back from the combustion chamber to the intake port 3 during valve overlapping, which stabilizes the combustion during idling.

When the volume of the intake passage 12 is increased by the volume changing means 11 during engine operation at low or intermediate load and speed, the negative pressure in the intake passage 12 is increased and the self EGR gas will flow back to the intake port 3 during valve overlapping. Therefore, in this operating range, a large amount of self EGR gas is supplied to the intake port 3 during valve overlapping, so that the combustion temperature is lowered by the self EGR gas which contains large burnt gas components, effecting reduced NOx emissions.

It has been found that among the burnt gases discharged from the combustion chamber, the ones discharged at earlier and final stages of the exhaust stroke have relatively high ratios of HC components. The self EGR gas flowing back from the exhaust port 4 during valve overlapping, which is a burnt gas discharged from the combustion chamber at the final stage of the exhaust stroke, contains relatively high ratio of HC components, but these HC components can be burned in the next combustion cycle. Therefore, the HC components contained in the exhaust gas discharged from the exhaust pipe to the atmosphere are only those contained in the burnt gas discharged from the combustion chamber at earlier and middle stages of the exhaust stroke, thereby reducing HC emissions to the atmosphere.

Further, the intake system is arranged such that the volume of the intake passage 12 is smaller when the engine is operated in a high load and speed range than when it is operated in an intermediate load and speed range, or at least in a low load and speed range. Therefore, the self EGR gas is prevented from flowing back to the intake port at this time, so that a larger amount of fresh air can be supplied to the combustion chamber.

Furthermore, in this intake system, the volume changing means 11 is arranged such that the volume of the air chamber 13a in communication with the intake passage 12 is changed through piston 13b, so that the volume of the intake passage 12 can be changed by driving the piston 13b Thus, the volume of the intake passage 12 can be changed with a simple structure, providing a low cost intake system.

### A second embodiment:

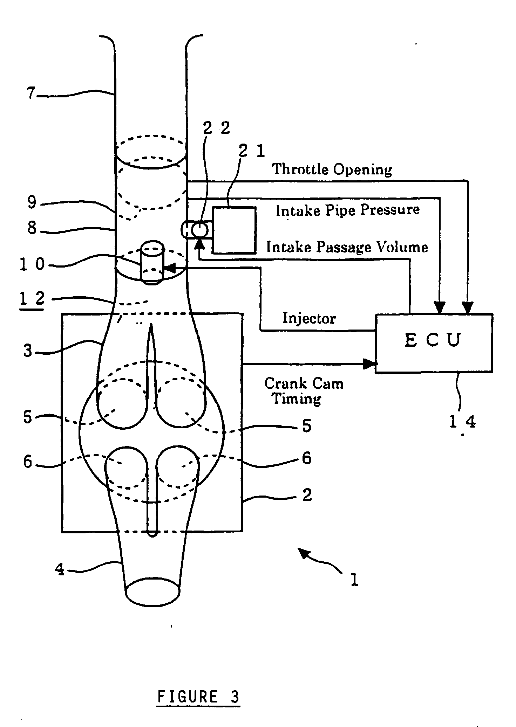

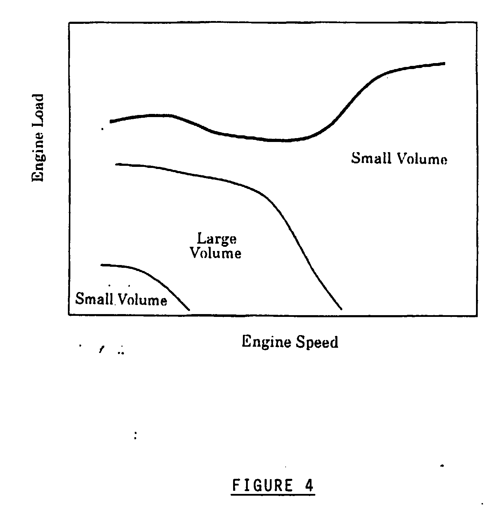

The volume changing means can be arranged as shown in Fig. 3 and Fig. 4.
Fig. 3 is a structural illustration showing another embodiment of the volume changing means, and Fig. 4 is a diagram acting as a map for use in controlling the volume changing means. In these figures, the same or equivalent members as illustrated in Fig. 1 are designated by the same reference numerals, and detailed descriptions are omitted.

The volume changing means 11 shown in Fig. 3 is composed of a chamber 21 in communication with the intake passage 12, an opening/closing valve 22 disposed in the communication passage of the chamber 21, an ECU 14, etc. Changing the volume of the intake passage 12 by the volume changing means 11 is performed by opening/closing the opening/closing valve 22. That is, when the opening/closing valve 22 is opened, the effective volume of the intake passage 12 amounts to the value including the volume of the chamber 21. When the valve 22 is closed, the volume of the intake passage 12 is equivalent to the volume defined by the opening/closing valve 22.

This embodiment, as shown in Fig. 4, is arranged such that the opening/closing valve 22 is closed during idling and high load and speed operation to reduce the volume of the intake passage 12, and opened during low and intermediate load and speed operation to enlarge the volume of the intake passage 12.
This arrangement also provides the same effects as in the first embodiment.

### A third embodiment:

While, in the preceding embodiments, examples have been shown in which this invention is applied to single cylinder engines, it is also applied to multi-cylinder engines.

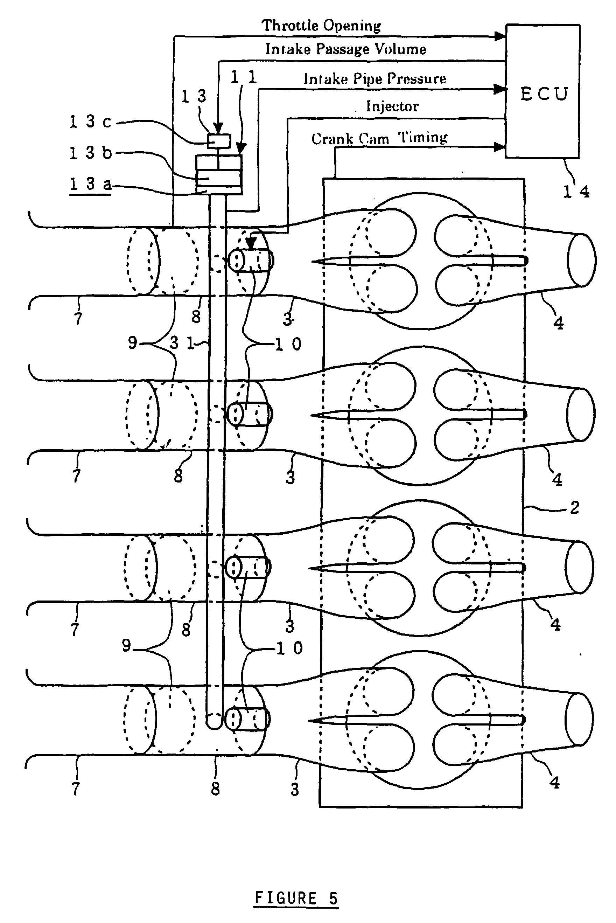

Fig. 5 is a structural illustration of a multi-cylinder engine embodying this invention. In the figure, the same or equivalent members as illustrated in Fig. 1 are designated by the same reference numerals, and detailed descriptions are omitted.

The engine shown in Fig. 5 is of a four cylinder type, and provided with an intake port 3, a throttle body 8, and an intake duct 7 for each cylinder. The throttle body 8 of each cylinder is connected to the motor-driven cylinder 13 through a common communication pipe 31.

In this arrangement described above, HC or NOx emissions in the exhaust gas can also be reduced by controlling the self EGR gas for multi-cylinder engines as in the preceding embodiments. Especially, owing to the common use of a motor-driven cylinder to the cylinders as shown in this embodiment, this arrangement has the advantage of simultaneous volume change of the passage 12 in each cylinder with the result of smooth engine operation.

### A forth embodiment:

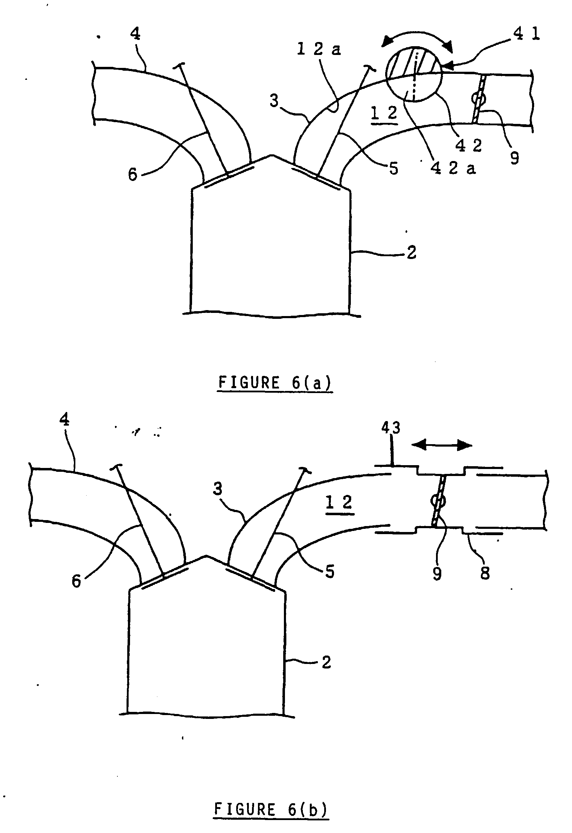

The volume changing means can also be arranged as shown in Fig. 6(a), (b).
Fig. 6(a), (b) are structural illustrations showing other embodiments of the volume changing means. In these figures, the same or equivalent members as illustrated in Fig. 1-Fig. 5 are designated by the same reference numerals, and detailed descriptions are omitted.

In the volume changing means 41 shown in Fig. 6(a), a volume changing member 42 is mounted, for free rotational movement, to an upper wall 12a of the intake passage 12. The volume changing member 42 is made of a rod formed with a cutout 42a constituting a part of the upper wall 12a, and connected to a motor-driven actuator (not shown). That is, the volume of the Intake passage 12 is maximized when the volume changing member 42 is positioned in place as shown in the figure, and decreased when it Is positioned as shown in a double dot and dash line in Fig. 6(a).

The volume changing means 43 shown in Fig. 6(b) is arranged such that a throttle body 8 is disposed for free axial movement along the intake passage 12. The throttle body 8 is connected to a motor-driven actuator (not shown), and moved rightward in the figure for a larger volume of the intake passage 12, while moved leftward in the figure for a smaller volume of the intake passage 12.
This arrangement also provides the same effects as in the preceding embodiments.

### A fifth embodiment:

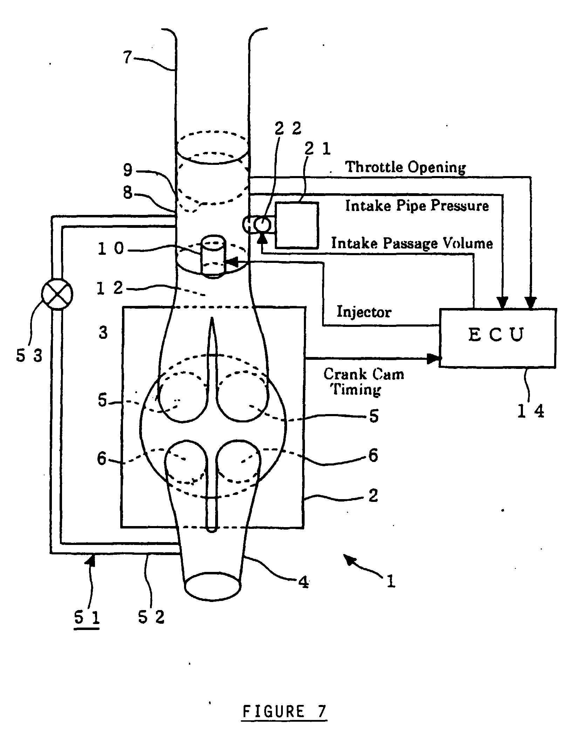

In the preceding embodiments have been shown examples utilizing a self EGR gas only, but an external EGR gas can be utilized as shown in Fig. 7.
Fig. 7 is a structural illustration showing another embodiment incorporating an external EGR unit. In this figure, the same or equivalent members as illustrated in Fig. 3 are designated by the same reference numerals, and detailed descriptions are omitted.

In Fig. 7, numeral 51 represents an external EGR unit, which is composed of an EGR exhaust gas passage 52 for providing communication, externally of the engine 1, between the exhaust passage and the intake passage downstream from the throttle valve 9, and an EGR control valve 53 disposed in the exhaust gas passage 52. The EGR control valve 53 is an opening/closing and flow control valve, which is arranged so as to close the EGR exhaust gas passage 52 when the engine is operated in an idling state, and to increase its opening with increasing engine load. In addition, the EGR control valve 53 is arranged such that it closes the EGR exhaust gas passage 52 when the engine is operated in a high load and speed range.

As a result of the external EGR unit 51 described above, the external EGR gas as well as the self EGR gas can be utilized, providing a smaller variable volume range of the intake passage. Therefore, reduction of NOx emissions can be effected even for a engine with small valve overlapping.

Further, the opening of the EGR control valve 53 is increased with increasing throttle valve opening till the engine 1 reaches a high load and speed operating range, so that the flow rate of the EGR gas can be increased in response to engine load. Thus, NOx emissions can be reduced more reliably regardless of changes in engine load.

One engine according to this invention is characterized in that volume changing means is provided in the intake passage between a throttle valve and an intake valve, said volume changing means being arranged such that the volume of said intake passage is minimized when the engine is operated in an idling state, and increased with increasing engine load when the engine is operated in an intermediate load and speed range, or at least in a low load and speed range. Therefore, a relatively larger volume of the intake passage 12 results in an increased amount of fresh air in the intake passage 12, so that the same output can be obtained for a smaller throttle opening.

Thus, when the volume of the intake passage is increased by the volume changing means during engine operation at intermediate load and speed, or at least at low load and speed, the engine can be operated with a relatively small throttle opening and at a larger negative pressure. Therefore, In this operating range, a larger amount of self EGR gas is supplied to the intake port during valve overlapping. As a result, reduction of NOx emissions can be effected during engine operation from an idling state to an intermediate load and speed range.

It has been found that among the burnt gases discharged from the combustion chamber, the ones discharged at earlier and final stages of the exhaust stroke have relatively high ratios of HC components. The self EGR gas flowing back from the exhaust pipe during valve overlapping, which is a burnt gas discharged from the combustion chamber at the final stage of the exhaust stroke, contains relatively high ratio of HC components, but these HC components can be burned in the next combustion cycle. Therefore, the HC components contained in the exhaust gas discharged from the exhaust pipe to the atmosphere are only those contained in the burnt gas discharged from the combustion chamber at earlier and middle stages of the exhaust stroke, thereby reducing HC emissions to the atmosphere.

Therefore, both HC and NOx emissions in the exhaust gas can be reduced during engine operation of low and intermediate load and speed ranges even for a high output type engine with a relatively long valve overlapping period.

Another engine according to this invention is characterized by the preceding engine, wherein the volume of the intake passage is smaller when the engine is operated in a high load and speed range than when it is operated in an intermediate load and speed range, or at least in a low load and speed range. Therefore, the volume of the intake passage becomes small during engine operation at high load and speed, preventing the back flow of the self EGR gas to the intake port.
Thus, a large amount of fresh air is supplied to the combustion chamber, providing maximum output.

Yet another engine is characterized by one of the preceding engine intake systems, wherein said volume changing means is arranged such that the volume of an air chamber in communication with said intake passage is changed through a piston. Therefore, the volume of the intake passage can be changed by driving the piston.

Thus, the volume of the intake passage 12 can be changed with a simple structure, so that this invention can be realized at low cost.

Still another engine intake system is characterized by any one of the preceding intake systems, wherein an external EGR unit with an EGR exhaust gas passage is provided, said EGR gas exhaust passage connecting an exhaust passage and the intake passage externally of the engine. Therefore, an external EGR gas as well as a self EGR gas can be utilized, reducing the variable volume range of the intake passage.

As a result, reduction of NOx emissions can be effected even for a engine with small valve overlapping. In addition, the variable volume range of the intake passage can be made small, providing a compact engine.

Still another engine intake system is characterized by the preceding engine intake system, wherein an EGR control valve disposed in the EGR exhaust gas passage is arranged such that its opening increases with an increase in throttle valve opening. Therefore, since the flow rate of the external EGR gas is increased as engine load increases, NOx emissions can be reduced more reliably regardless of changes in engine load.

## Claims

1. Internal combustion engine (1) comprising an intake system and an exhaust system, said systems are controllable such that during operation of said engine (1) valve overlapping being establishable, **characterized by** a volume changing means (11;41;43) for variably changing the volume of an intake passage (12) in dependence of engine operating conditions.

2. Internal combustion engine according to claim 1, **characterized in that** said volume changing means (11;41;43) being provided between a throttle valve (9) and at least one intake valve (5).

3. Internal combustion engine according to claim 1 or 2, **characterized in that** said volume changing means (11;41:43) being adapted to control said volume such that said volume being minimizable during an idle state.

4. Internal combustion engine according to one of the preceding claims 1 to 3, **characterized in that** said volume changing means (11;41;43) being adapted such that said volume being increasable with the engine load, when said engine (1) being operated in an intermediate load and speed range, or at least in a low load and speed range.

5. Internal combustion engine according to one of the preceding claims 1 to 4, **characterized in that** said volume changing means (11;41;43) being adapted such that said volume being smaller during the operation of said engine (1) in a high load and speed range than during the operation of said engine (1) in an intermediate load and speed range, or at least in a low load and speed range.

6. Internal combustion engine according to one of the preceding claims 1 to 5, **characterized in that** said volume changing means (11) comprising an air chamber (13a) communicating with said intake passage (12) and a piston (13b) for slidably varying the air chamber volume.

7. Internal combustion engine according to one of the preceding claims 1 to 5, **characterized in that** said volume changing means (11) comprising a chamber (21) communicating with said intake passage (12) via a communication passage, and an opening/closing valve (22) provided within said communication passage.

8. Internal combustion engine according to one of the preceding claims 1 to 5, **characterized in that** said volume changing means (41) comprising a volume changing member (42) made of a rod having a cut-out (42a), said volume changing member (42) being provided in an upper wall (12a) of said intake passage (12).

9. Internal combustion engine according to one of the preceding claims 1 to 5, **characterized in that** said volume changing means (43) comprising a throttle body (8) having a throttle valve (9), said throttle body (8) being adapted to freely move along the axis of said intake passage (12).

10. Internal combustion engine according to one of the preceding claims 1 to 9, **characterized in that** an external EGR unit (51) being provided comprising an EGR exhaust gas passage (52) connecting an exhaust passage with said intake passage (12).

11. Internal combustion engine according to claim 10, **characterized in that** an EGR control valve (53) being provided within said EGR exhaust gas passage (52), said EGR control valve (53) being adapted to increase its effective opening with an increase of the effective opening of a throttle valve (9).

12. Internal combustion engine according to one of the preceding claims 1 to 11, **characterized by** an ECU (14) for controlling said volume changing means (11;41;43).

13. Internal combustion engine according to claim 12, **characterized in that** said ECU (14) being provided with a prestored map for controlling said volume changing means (11;41;43) according to engine operating conditions detected.

14. Internal combustion engine according to one of the preceding claims 1 to 13, **characterized in that** said internal combustion engine is a four cylinder in-line engine, each cylinder having an intake passage, and that a communicating means (31) being provided for changing the respective volumes of said intake passages simultaneously.
